(19) Europäisches Patentamt / European Patent Office / Office européen des brevets

(11) **EP 4 091 860 A1**

(12) **EUROPEAN PATENT APPLICATION**

(43) Date of publication:
**23.11.2022 Bulletin 2022/47**

(21) Application number: **22154608.8**

(22) Date of filing: **01.02.2022**

(51) International Patent Classification (IPC):
**B60L 15/20** $^{(2006.01)}$       **B60L 3/12** $^{(2006.01)}$

(52) Cooperative Patent Classification (CPC):
**B60L 15/2036; B60L 3/12;** B60L 2200/24;
B60L 2220/42; B60L 2240/12; B60L 2240/20;
B60L 2240/421; B60L 2240/80; B60L 2250/18

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2021   JP 2021084044**

(71) Applicant: **Suzuki Motor Corporation
Hamamatsu-shi, Shizuoka 432-8611 (JP)**

(72) Inventor: **Raja, Gopinath
Hamamatsu-shi, Shizuoka, 432-8611 (JP)**

(74) Representative: **Henkel & Partner mbB
Patentanwaltskanzlei, Rechtsanwaltskanzlei
Maximiliansplatz 21
80333 München (DE)**

(54) **SMALL ELECTRIC VEHICLE**

(57)     [Problem to be Solved] A small electric vehicle that achieves traveling characteristics according to the proficiency of a user is provided.

[Solution] A small electric vehicle (1) includes: left and right motors (40L and 40R) connected so as to respectively transmit power to left and right driving wheels (4L and 4R); left and right rotation speed sensors (43); a joystick-type operation element (83); and a control unit (10), wherein it is configured to calculate target rotation speeds of the left and right motors, based on a target vehicle speed and a target vehicle angular velocity that are provided according to an operation position of the operation element, and control the left and right motors such that the actual rotation speeds of the left and right motors follow the respective target rotation speeds, and configured to update at least one target value, according to a cumulative number of travels ($\beta$) obtained by dividing, by a predetermined control unit, a cumulative total value of a cumulative power consumption obtained by the battery management unit.

FIG.3

## Description

[Technical Field]

The present invention relates to a small electric vehicle.

[Background Art]

Small electric vehicles including electric wheelchairs and cart-type electric rollators for users having difficulty in walking, such as the elderly, have been publicly known. For example, Patent Literature 1 discloses a small electric vehicle (electric wheelchair) that includes left and right motors that individually drive respective left and right driving wheels, and is configured such that the numbers of revolutions of left and right motors are determined from an operation position of joystick-type operation means, the vehicle goes forward when an operation element is tilted forward, it turns when the piece is tilted obliquely forward, it turns about a fixed position when the piece is tilted obliquely backward, and it stops when the piece is tilted straight backward.

[Citation List]

[Patent Literature]

[Patent Literature 1] JP 2014-064620 A

[Summary of Invention]

[Problems to be Solved by the Invention]

As for the small electric vehicle as described above, the speed (speed difference between left and right) is determined by the operation position of the joystick-type operation element. Accordingly, for example, in a case of turning at a slow speed, the operation element is required to be held at an intermediate operation position, which leads to a problem for a user having low proficiency in driving at an intended speed on a route.

The present invention has been made in view of the points of the prior art described above, and it has an object to provide a small electric vehicle that can achieve the operability and traveling characteristics according to the proficiency of a user.

[Means for Solving the Problems]

To solve the problems described above, the inventor has diligently studied and gained the understanding that since there is to some extent a correlation between the period of time a small electric vehicle is used and proficiency of use, and the period of time of use is correlated with cumulative power consumption (the number of full charges) of the battery, the operability and the traveling characteristics according to proficiency can be understood by reflecting the cumulative power consumption in the control, thus achieving the present invention.

That is, a small electric vehicle according to the present invention includes:

a vehicle body that has a forward and backward direction, and a width direction;
left and right driving wheels provided apart in the width direction of the vehicle body;
free wheels provided apart from the left and right driving wheels in the forward and backward direction of the vehicle body;
left and right motors connected so as to respectively transmit power to the left and right driving wheels;
a battery for supplying power to the left and right motors;
a battery management unit that manages charging and discharging of the battery;
left and right rotation speed sensors for detecting rotation speeds of the left and right motors;
an operation unit that includes a joystick-type operation element; and
a control unit that controls the left and right motors according to an amount of operation on the operation element,
wherein the control unit is configured to calculate target rotation speeds of the left and right motors, based on a target vehicle speed and on a target vehicle angular velocity that are provided by an operation position of the operation element, and control the left and right motors such that actual rotation speeds of the left and right motors follow the respective target rotation speeds, and
update at least one target value selected from the group consisting of the target vehicle speed, the target vehicle angular velocity, a target vehicle acceleration provided according to the target vehicle speed and an actual speed of a vehicle, and a target vehicle angular acceleration provided according to the target vehicle angular velocity and the actual speed of the vehicle, according to a cumulative number of travels obtained by dividing a cumulative total value of a cumulative power consumption obtained by the battery management unit by a predetermined unit of control.

[Advantageous Effects of Invention]

As described above, the small electric vehicle according to the present invention can determine the operability and the traveling characteristics according to the proficiency of a user, by the configuration of gradually updating the target values of defining the traveling characteristics and the turning characteristics of the vehicle, such as the target vehicle speed, the target vehicle angular velocity, the target vehicle acceleration, and the target vehicle angular acceleration, according to the cumulative number of travels obtained by dividing the cumulative total value of the cumulative power consumption by a predetermined unit of control. Consequently,

(i) At the start of use, a target value that is partial to the rated one is adopted, which can achieve mild traveling characteristics, and allow even a user with low proficiency to easily operate,
(ii) by updating the target value for every unit of control (e.g., the power consumption corresponding to one to several full charges), the traveling characteristics can be improved according to the proficiency of the user, without providing uncomfortable feeling.
(iii) Finally, the target value corresponding to the rated one is reached, which can sufficiently exert the performance that the vehicle has, and the demands of a skilled user can be satisfied.

[Brief Description of Drawings]

[Figure 1] Figure 1 is a side view showing a small electric vehicle.
[Figure 2] Figure 2 is a block diagram showing a control system of the small electric vehicle.
[Figure 3] Figure 3 is a block diagram showing left and right motor control according to an embodiment.
[Figure 4] Figure 4 is an initial/final target vehicle speed map according to the cumulative number of travels.
[Figure 5] Figure 5 is an initial/final target angular velocity map for low speed (a), and an initial/final target angular velocity map for high speed (b), according to the cumulative number of travels.
[Figure 6] Figure 6 is an initial/final target vehicle acceleration map according to the cumulative number of travels and the actual speed.
[Figure 7] Figure 7 is an initial/final target vehicle angular acceleration map according to the cumulative number of travels and the actual speed.
[Figure 8] Figure 8 is an initial/final target vehicle deceleration map according to the cumulative number of travels and the actual speed.
[Figure 9] Figure 9 is an initial/final target vehicle angular deceleration map according to the cumulative number of travels and the actual speed.

[Mode for Carrying Out the Invention]

Hereinafter, embodiments of the present invention are described in detail with reference to the drawings.

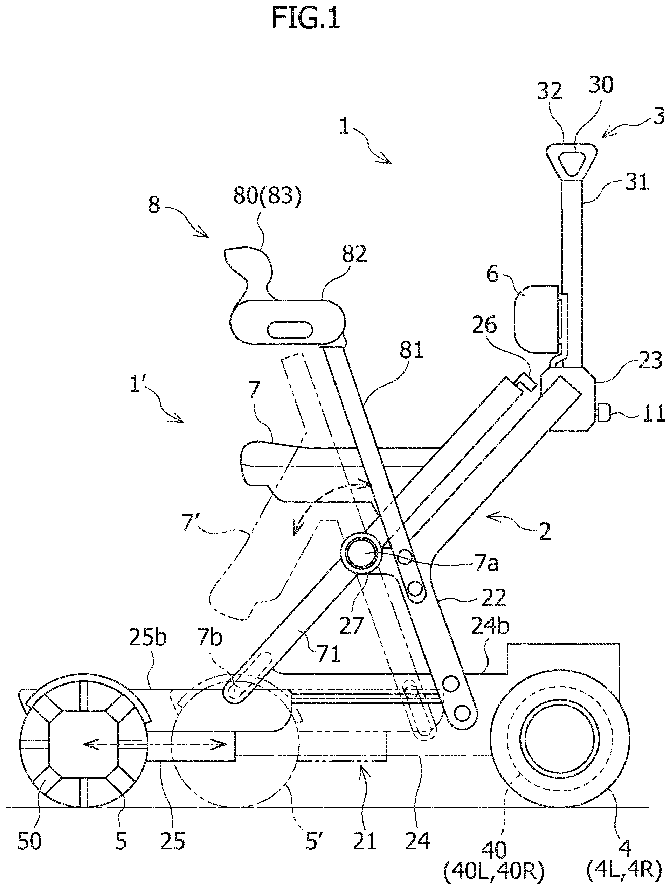

In Figure 1, an electric vehicle 1 according to an embodiment of the present invention includes a vehicle body 2 made up of a mobile base 21 (lower traveling body), and an upper frame 22 provided to stand from a rear part (rear-side base 24) of the mobile base 21, and is usable in a small electric vehicle mode (riding mode 1) indicated by solid lines in the diagram, and in a rollator mode (1') indicated by chain double-dashed lines in the diagram.
The mobile base 21 includes: the rear-side base 24 (main body part) provided with left and right driving wheels 4 (rear wheels), and the upper frame 22; and a front-side base 25 provided with left and right driven wheels 5 (front wheels). The front-side base 25 is joined to the front side of the rear-side base 24 slidably in the front and rear direction. The mobile base 21 is configured such that the wheelbase is expandable and contractible.
The left and right driving wheels 4 are independently driven respectively by left and right motor units 40 (40L and 40R) mounted on the rear-side base 24. The left and right driven wheels 5 is made up of free wheels (omni wheels, or omnidirectional wheels) including many rotatable rollers 50 at grounding parts around axes in circumferential directions. As described later, the electric vehicle 1 can be steered, braked, and driven only by controlling the left and right motor units 40L and 40R.
The upper frame 22 have an inverted U form or a gate shape formed by joining upper ends of a pair of left and right side frames provided to stand upward from both the left and right sides of the rear-side base 24, with an upper end frame extending in the vehicle width direction. A lower end part of a stem 31 of a rear handle 3 is rigidly coupled to a coupling part 23 at the center of the upper end frame in the vehicle width direction, and a seat backrest 6 is supported at the coupling part 23.
The rear handle 3 is formed in a T-bar shape that has a pair of grip parts extending left and right from a connection portion 32 with the upper end of the stem 31. At the left and right grip parts of the rear handle 3, grip sensors 30 that detect a state of gripping (hands on) by a user (or a helper) are provided. Touch sensors, such as capacitance sensors or pressure-sensitive sensors, can be used as the grip sensors 30. The left and right grip parts of the rear handle 3 serve as an operation unit in a case of use by the user alone in the rollator mode (1'), and in a case in which a helper or the like operates the electric vehicle in a case in which the user is seated on the seat 7. Note that although omitted in Figure 1, an electromagnetic brake release switch 34, and a speaker 35 are provided on the connection portion 32 at the center of the rear handle 3.
Base parts of support frames 81 for armrests 82 are fixed at bent parts at the middle of the upper frame 22 (side frames) in the height direction. A joystick 83, which constitutes a riding mode operation unit 8, is provided at a front end part of the armrest 82 on the right side, which is a deeper side in the Figure 1. A display unit 80 and a travel permission switch 84 are provided on an upper surface of the grip part having the same shape at a front end part of the armrest 82 on the left side, which is a near side in Figure 1.
A two-axis joystick that can be tilted to the front, rear, left, and right, and allows an output to be obtained depending on a tilted angle, or a multi-axis joystick involving this function may be used as the joystick 83. A non-contact joystick that uses a Hall sensor is preferable. The joystick 83 is configured such that an urging force (a restoring force or an operational reaction force) toward a neutral position depending on the tilted angle is applied, by an urging member (spring, etc.), not shown. In a state in which no operational force is applied, that is, a state in which the hand of the user is off the joystick 83, the joystick returns by itself to the neutral position (operation origin). Control of the left and right motor units 40 (40L and 40R) through an operation on the joystick 83 is described later.

At a pivot support part 27 that protrudes forward from the bent parts of the upper frame 22 (side frames), support frames 71 for the seat 7 (seat cushion) are pivotably supported by a shaft 7a in the vehicle width direction. In addition, the lower ends of the support frames 71 are rotatably and slidably joined to the front-side base 25 (pins) via the joining parts 7b (slots).

According to the configuration described above, when the seat 7 at a seating position is turned downward ahead from the riding mode (1), indicated by the solid lines in the diagram, to a folded position (7') as indicated by chain double-dashed lines in the diagram, the front-side base 25 is slid backward in an interlocking manner, the mobile base 21 is shortened, and the mode becomes a rollator mode (1'), which allows user operation while standing and walking with the rear handle 3 being gripped.

Conversely, when the seat (7') at the folded position is moved from the rollator mode (1') to the seating position 7 by turning upward behind, the front-side base 25 slides forward, the mobile base 21 is elongated, and the mode becomes the riding mode (1). In this state, an upper surface 25b of the front-side base 25 moved ahead of a tray 24b can be used as a footrest for a passenger.

Note that locking mechanisms (locking pins or the like urged by urging members, such as springs) that lock the front-side base 25 at each of an elongated position and a shortened position are provided in the mobile base 21, in which a vehicle state detection sensor 28 (mechanical switch etc.) that detects the locked state in each position is attached. Furthermore, urging members (springs, etc.) for urging toward the intermediate position (in a release direction) at each of the elongated position and the shortened position are provided. Release tags 26 joined to the locking mechanisms through Bowden cables are provided at upper end portions of the support frames 71.

Accordingly, the configuration is made such that when the release tags 26 are pulled at either of the elongated position and the shortened position, the locking mechanisms are released, the vehicle body 2 is at the intermediate position by being urged by the urging members, and when, from this state, the seat 7 (support frames 71) is turned forward or backward from the intermediate position against urging by the urging members, and the locking mechanisms are locked at either of the elongated position and the shortened position of the front-side base 25.

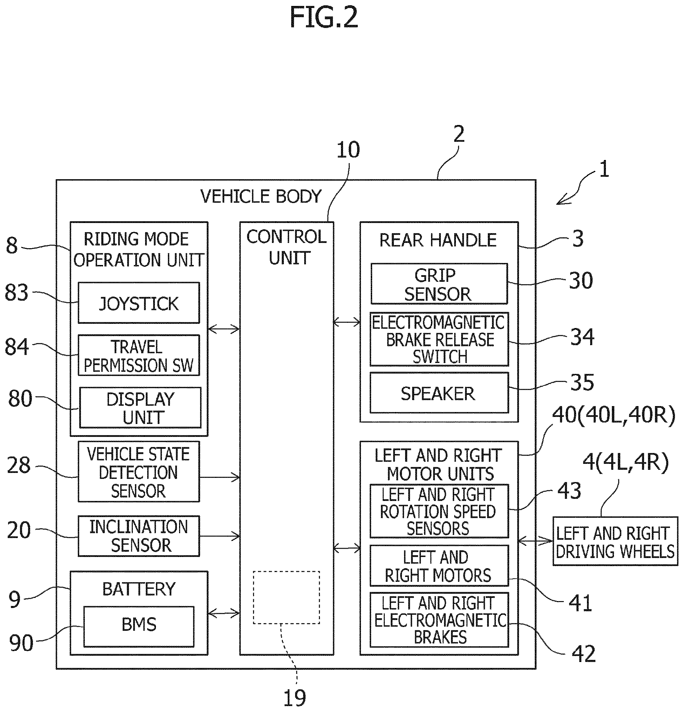

Figure 2 is a block diagram showing a control system of the electric vehicle 1. The electric vehicle 1 includes a battery 9 that supplies power to the left and right motor units 40 (40L and 40R), and a control unit 10 that controls the left and right motor units 40 (40L and 40R). The control unit 10 has an interlock function of executing control for each of the riding mode (1) and the rollator mode (1') in the locked state at the corresponding position detected by the vehicle state detection sensor 28.

In the riding mode (1), the grip sensors 30 are disabled, the control unit 10 is configured to control the speeds of the left and right motor units 40 (40L and 40R) on the basis of a control map, described later, in response to an operation (the amount of operation, and operation direction) on the joystick 83, which constitutes the riding mode operation unit 8, when the travel permission switch 84 is turned on, and allow drive operations that include going forward, backward, turning, and braking and stopping of the electric vehicle 1. Note that when an inclination equal to or greater than a predetermined threshold is detected by an inclination sensor 20, the target speed is corrected in consideration of the gravity (load) applied depending on the inclination.

On the other hand, in the rollator mode (1'), the riding mode operation unit 8 is disabled, the control unit 10 controls the torques of the left and right motor units 40 (40L and 40R) on the basis of detection information from the inclination sensor 20, the left and right rotation speed sensors 43 and the like and of a predetermined control map. Note that when an inclination equal to or greater than a predetermined threshold is detected by the inclination sensor 20, a compensation torque for compensating for the gravity (load), which is applied depending on the inclination, is superimposed on the torque command value. The grip sensor 30 only detects a grip (hands on/off) on the rear handle 3 by the user, and is not involved in the torque control of the motor units 40.

The control unit 10 includes: a computer (microcomputer) made up of a ROM that stores a program and data for executing control in each of the modes, a RAM that temporarily stores a computation processing result, a CPU that performs computation processes and the like; and a power source circuit that includes drive circuits (motor drivers) for the left and right motors 41, and a relay that turns the power of the battery 9 on and off.

The left and right motor units 40 (40L and 40R) each include a motor 41, an electromagnetic brake 42 that locks the rotor of the corresponding motor 41, and a rotational position sensor (43) that detects the rotational position of the corresponding motor 41. Drive shafts of the motors 41 are connected to the respective driving wheels 4 (4L and 4R) via reduction gears, not shown, in a power-transmissible manner.

The left and right motors 41 are made up of brushless DC motors that switch the currents in coils in corresponding phases in the drive circuits to support the phases of rotors detected by the rotational position sensors (43). In the riding mode (1), the rotational position sensors (Hall sensors) are used as vehicle speed sensors (43) that detect the actual speed of the electric vehicle 1. In the rollator mode (1'), the rotational position sensors are used as the rotation speed sensors 43.

The drive circuits for the left and right motors 41 include current sensors that detect coil currents. The coil currents correspond to the torques of the left and right motors 41. The control unit 10 executes the torque control of the left and right motors 41 by controlling the coil currents through PWM control (pulse width modulation control) or the like.

Preferably, the electromagnetic brakes 42 are negative actuated type electromagnetic brakes that lock the drive shafts of the motors 41 in an unexcited state, and release the locking in an excited state. By adopting the negative actuated type electromagnetic brakes, the electric vehicle 1 can be securely stopped when the key is turned off or is at a stop without consuming power.

On the other hand, to cause the locks of the electromagnetic brakes 42 to be released and allow the electric vehicle 1 to be movable in case of urgency or emergency, for example, in a case in which it is intended to move the electric vehicle 1 without using the power of the motors 41, or in an undrivable case due to reduction in remaining battery charge, the electromagnetic brake release switch 34 is provided as forcible release means for the electromagnetic brakes 42. The electromagnetic brake release switch 34 is provided adjacent to the grip part of the rear handle 3, but is operable irrespective of detection of gripping of the grip sensor 30.

The inclination sensor 20 is implemented on a circuit board of the control unit 10 mounted in the mobile base 21 (rear-side base 24) of the vehicle body 2. A two-axis inclination sensor or an acceleration sensor that detects the inclination in the front and rear direction of the vehicle body 2 (pitch angle P) and the inclination in the lateral direction (roll angle R), or a multi-axis inertial sensor in which an angular acceleration sensor (gyroscope sensor) is additionally integrated with the aforementioned sensor is usable. Preferably, when an inclination having a predetermined threshold or more is detected by the inclination sensor 20, the control unit 10 is configured to correct the target vehicle speed and the target vehicle angular velocity so as to at least partially compensate for the gravity (load), which is applied depending on inclination.

The battery 9 is a secondary battery, such as a lithium-ion battery, mounted in the mobile base 21, and may be configured as a detachable battery pack so as to be easily chargeable from a commercial power source or the like. The battery 9 includes a BMS 90 (battery management unit) for monitoring the input and output current, total voltage, remaining capacity and the like, and managing the state of the battery.

The BMS 90 has a function of obtaining the remaining capacity (SOC) on the basis of the integrated value of the input and output current (cumulative power consumption). The remaining capacity obtained by the BMS 90 is stored in the control unit 10, and is displayed on the display unit 80. The control unit 10 is configured to prompt the user, through the display unit 80, to perform charging when the remaining capacity obtained from the BMS 90 becomes less than a predetermined threshold.

Travel control in riding mode

According to the electric vehicle 1 configured as described above, in the riding mode (1), the rotation speeds of the left and right motors 41 (40L and 40R) are controlled based on an operation (an amount of operation and an operation direction) on the joystick 83 by the user. However, the control target values (target rotation speeds etc.) of the left and right motors 41 (40L and 40R) are not immediately determined from the operation position of the joystick 83. Instead, it is configured so that the control target values are updated according to the cumulative traveling time (cumulative number of travels β) in the riding mode for the user to change the traveling characteristics and the turning characteristics.

The control unit 10 includes an update management unit 19 that calculates the cumulative total value Ps of the cumulative power consumption obtained from the BMS 90 during traveling in the riding mode, and obtains the cumulative number of travels β by dividing the cumulative total value Ps by a predetermined unit of control Pu. In the BMS 90, the remaining capacity of the battery 9 and the cumulative power consumption are reset when the charging is completed. However, the calculation of the cumulative total value Ps in the update management unit 19 is continued, and the cumulative total value Ps and the cumulative number of travels β are stored in the memory.

The unit of control Pu described above is a unit for designating timing (interval) when update control of a control map, described later, is executed. For example, if the cumulative power consumption corresponding to one full charge (charging corresponding to the rated capacity) of the battery is adopted as the unit of control, the cumulative number of travels β corresponds to the number of full charges from start of use in the riding mode. The cumulative number of travels β substantially corresponds to the cumulative traveling amount of the electric vehicle 1 in the riding mode, and corresponds to the cumulative traveling time of the electric vehicle 1 in the riding mode by the user. Consequently, although there is a difference according to differences in individuals and the differences due to use situations, the number of travels corresponds to the user's proficiency in travel in the electric vehicle 1 in the riding mode.

The control unit 10 includes a control map for designating control target values (target rotation speeds etc.) for the left and right motors 41 (40L and 40R) based on the operation position of the joystick 83 by the user in the riding mode (1). To execute update control of the control target values, this unit further includes:

 i) an initial target map (x0) corresponding to the control target value at the start of use (β=0); and
 ii) a final target map (xm) corresponding to the control target values at an update control ending time (β=βm).

Based on an initial value (X0) and a final value (Xm) designated in the above maps, proportional distribution is performed with the ratio of the cumulative number of travels β to the final number of travels βm, using the conversion equation as the following expression 1, thereby calculating the control target value at the cumulative number of travels β.

$$\text{(Expression 1)} \quad X = X0 + \beta*(Xm - X0)/\beta m$$

The update control as described above based on the cumulative number of travels β is continued after the start of use (β=0) until the cumulative number of travels β reaches the final number of travels βm. After the final number of travels βm is reached, the control target values based on the final target map (xm) are immediately designated.

The final target map (xm) is a rated target map (xm) that designates target values of the electric vehicle 1 corresponding to rated ones. It is assumed that settings are adopted in which the traveling characteristics and the turning characteristics allowing the performance of the electric vehicle 1 to be sufficiently controlled by the operation by a skilled user are achieved. On the other hand, the initial target map (x0) has settings in which target values restrained in comparison with those corresponding to the rated ones are designated in order to allow even a user with low proficiency to easily perform operation, and achieve mild traveling characteristics (acceleration/deceleration characteristics) and turning characteristics.

What are assumed to be control target values for executing update control as described above based on the cumulative number of travels β are the target vehicle speed v, the target vehicle angular velocity ω, a target vehicle acceleration a and a target vehicle deceleration d that are provided according to the target vehicle speed and the actual speed of the vehicle, and a target vehicle angular acceleration α and a target vehicle angular deceleration δ that are provided according to the target vehicle angular velocity and the actual speed of the vehicle. First, the update control of the target vehicle speed v and the target vehicle angular velocity ω, which serve as the basis, are described.

Update control of target vehicle speed and target vehicle angular velocity

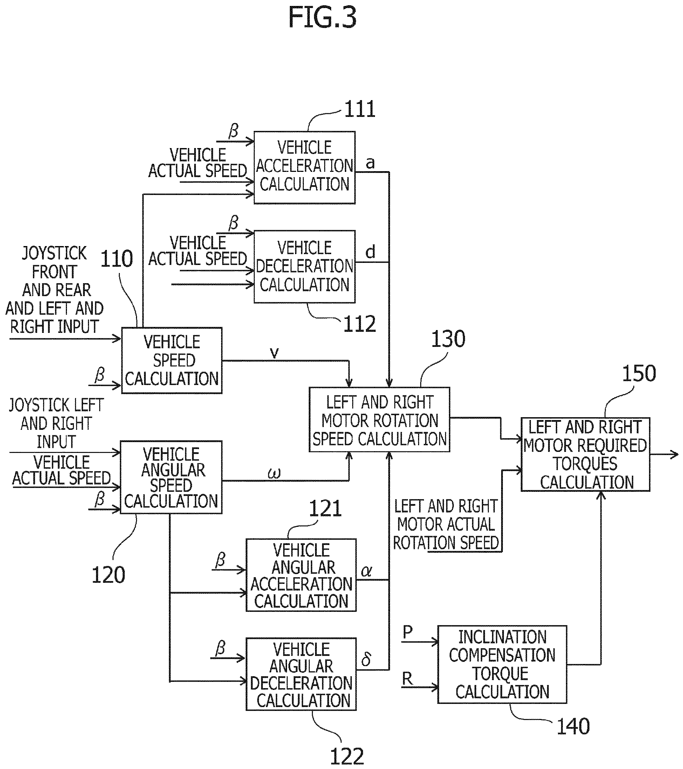

Figure 3 is a block diagram showing the left and right motor control including update control based on the cumulative number of travels β. As shown in the diagram, in the target vehicle speed calculation block 110, not only an input of the front and rear direction on the joystick 83, but also an input of the left and right direction and the cumulative number of travels β are reflected, and in the target vehicle angular velocity calculation block 120, in addition to the input of the left and right direction on the joystick 83 and the cumulative number of travels β, the vehicle actual speed during the operation are also reflected. Accordingly, as described later, speed control different from that during straight traveling can be executed during turning, and the turning characteristics can be changed by update control based on the cumulative number of travels β.

In the block diagram of Figure 3, based on the target rotation speeds of the left and right motors 41 (40L and 40R) corresponding to the target vehicle speed v calculated by the target vehicle speed calculation block 110, and on the difference between the target rotation speeds of the left and right motors 41 (40L and 40R) corresponding to the target vehicle angular velocity ω calculated by the target vehicle angular velocity calculation block 120, the target rotation speeds of the left and right motors 41 (40L and 40R) are calculated in a left and right motor target rotation speed calculation block 130.

Furthermore, in the left and right motor required torque calculation block 150, based on the actual rotation speeds of the left and right motors 41 (40L and 40R) detected by the left and right rotation speed sensors 43, and on the target rotation speeds of the left and right motors 41 (40L and 40R), the left and right motor required torques are calculated by feedback control (e.g., PID control) that causes the actual rotation speeds of the left and right motors 41 (40L and 40R) to follow the respective target rotation speeds. Based on these, current control for the left and right motors 41 (40L and 40R) is executed.

When the inclination sensor 20 detects a vehicle inclination equal to or greater than a predetermined threshold, a compensation torque calculation block 140 calculates a compensation torque in a direction of compensating for the climbing/traveling downhill load applied depending on the pitch angle P and/or the lateral direction load applied depending on the roll angle R, and superimposes the torque on the left and right motor required torques calculated by the left and right motor required torque calculation block 150.

Target vehicle speed map

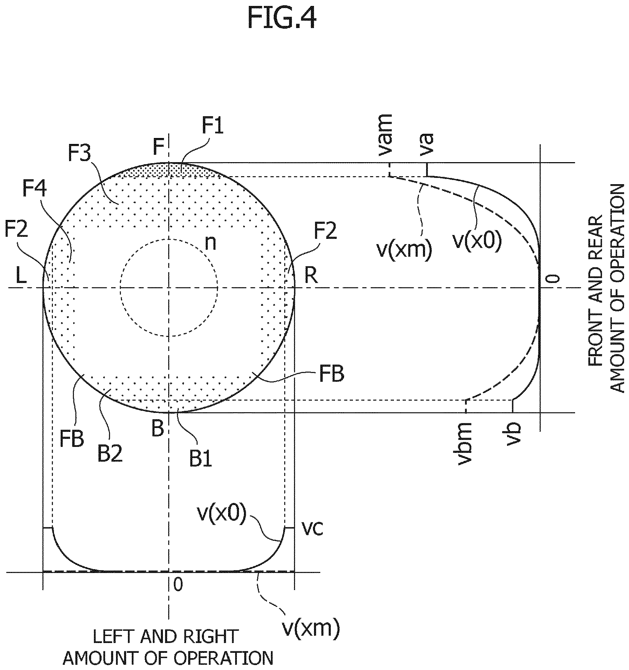

Figure 4 shows a target vehicle speed map for target vehicle speed calculation (110) by a joystick operation. In the diagram, solid lines for the front and rear amount of operation and the left and right amount of operation indicate an initial target vehicle speed map v(x0) at the start of use (β=0), and broken lines indicate a final target vehicle speed map v(xm) at the update control ending time (β= final number of travels βm).

These target vehicle speed maps are stored as look-up tables in the ROM area of the control unit 10. By the expression 1 described above, the target vehicle speed according to the cumulative number of travels β is calculated, and after the cumulative number of travels β reaches the final number of travels βm, the final target vehicle speed map v(xm) is applied.

In Figure 4, according to the initial target vehicle speed map v(x0), when the operation position of the joystick 83 is in a forward region F1 including the front end in the operation range, a target forward speed va is designated. When the position in a backward region B1 including the rear end, a target backward speed vb is designated. When the operation position of the joystick 83 is in any of left and right side regions F2 including the left and right ends, a target forward speed vc is designated. When the position in a center region n including the center (neutral position), stopping (a target speed of zero) is designated.

As indicated in maps on the right side and the lower side in Figure 4, the target forward speed va in the forward region F1 is higher than the target forward speed vc in the left and right side regions F2. The target forward speed vc in the left and right side regions F2 has a larger (or equal) absolute value than the target backward speed vb in the backward region B1 has. For example, according to the initial target vehicle speed map v(x0), the target forward speed va can be 3 to 5 km/h, the target forward speed vc can be 1 to 2 km/h, and the target backward speed vb can be 1 km/h.

Furthermore, in Figure 4, transition regions F3 and F4 in which the target forward speed increases from the center region n toward the forward region F1 and the left and right side regions F2 are provided between the center region n and the forward region F1, and between the center region n and the left and right side regions F2. A transition region B2 in which the target backward speed increases from the center region n toward the backward region B1 is provided between the center region n and the backward region B1. When the operation position of the joystick 83 is in the transition region F3 or the transition region B2, an intermediate target forward speed or an intermediate target backward speed is designated.

Consequently, not only when the joystick 83 is operated to the forward region F1 (and its transition region F3) but also when the joystick 83 is operated to any of the left and right side regions F2 (and its transition region F4), the target forward speed vc is designated, thereby allowing the forward rotation to be output even when a target vehicle angular velocity ±ω from a target vehicle angular velocity calculation 120 block, described later, is input.

This is such that if the proficiency of the user is low immediately after start of use, transition to forward turning according to an operation on the joystick 83 laterally left or right can achieve steering feeling as with an automobile or a bicycle that is steered by a handle, and immediate transition to pivot turn (spin turn) specific to a wheelchair is prevented, thereby achieving stable operability in which forward travel is prioritized.

There is another advantage in which the lateral movement of free wheels 5 made up of omni wheels is achieved by the rotation of the rollers 50, and the start performance and the step traveling performance are lower than those during straight traveling, and accordingly, the load on the system can be reduced by preventing immediate transition to pivot turn. Note that when the joystick 83 is operated obliquely backward FB, the target speed is zero at the middle between the left and right side regions F2 and the backward region B1. Pivot turn (spin turn) can be achieved at a narrow place, such as in a room or an elevator hall.

According to the final target vehicle speed map v(xm) indicated by the broken lines in Figure 4, a larger value than that in the case with the cumulative number of travels β=0 is designated as the target forward speed vam in a case in which the operation position of the joystick 83 is in the forward region F1. In other words, a smaller value than the final target forward speed vam is designated as the target forward speed va in the case with the cumulative number of travels β = 0.

For example, for the final target forward speed vam = 5 to 6 km/h in the case in which the operation position of the joystick 83 is in the forward region F1, the initial target forward speed va = 4 to 5 km/h may be adopted. For the final target backward speed vbm = 2 km/h in the case in which the operation position of the joystick 83 is in the backward region B1, the initial target backward speed vb = 1 km/h may be adopted.

On the other hand, according to the final target vehicle speed map v(xm), the target forward speed in the case in any of the left and right side regions F2 is zero. That is, a skilled user can maintain stable operability even if the forward travel by the forward operation on the joystick 83 transitions to forward turning by a slight lateral operation. Accordingly, immediate transition to pivot turn (spin turn) according to the operation on the joystick 83 to the laterally left or right is allowed, which can utilize the advantages of the electric vehicle 1 to the maximum.

Target vehicle angular velocity map

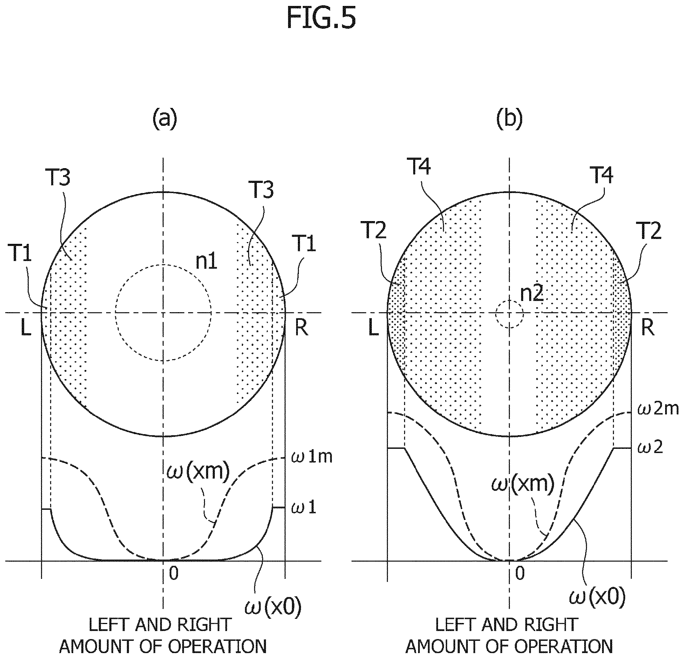

Next, Figure 5 shows a target vehicle angular velocity map for target vehicle angular velocity calculation (120) through joystick operation. The target vehicle angular velocity map includes: a target vehicle angular velocity map for low speed (a) that defines the target vehicle angular velocity when the actual speed is in a low speed region or a speed of zero; and a target vehicle angular velocity map for high speed (b) that defines the target vehicle angular velocity when the actual speed is at the maximum speed or in a predetermined high speed region in the setting speed region for the vehicle.

These target vehicle angular velocity maps (a) and (b) each include an initial target vehicle angular velocity map ω(x0) at the start of use (β=0) indicated by solid lines, and a final target vehicle angular velocity map ω(xm) at the update control ending time (β= final number of travels βm) indicated by broken lines. Both the maps are stored as look-up tables in the ROM area of the control unit 10. By the expression 1 described above, the target vehicle angular velocity ω according to the cumulative number of travels β is calculated. After the cumulative number of travels β reaches the final number of travels βm, a final target vehicle angular velocity map ω(xm) is applied.

According to the initial target vehicle angular velocity map for low speed (a) at the start of use (β=0) indicated by the solid lines in Figure 5, the target vehicle angular velocity ω1 is designated when the operation position of the joystick 83 is in left and right side regions T1 including the left and right ends in the operation range, and the target vehicle angular velocity of zero is designated when the position is in a center region n1 including the center (neutral position). Transition regions T3 in which the target vehicle angular velocity ω gradually increases from the center region n toward the left and right side regions T1 are provided between the center region n1 and the left and right side regions T1.

Similarly, according to the initial target vehicle angular velocity map for high speed (b) at the start of use (β=0), the target vehicle angular velocity ω2 is designated when the operation position of the joystick 83 is in left and right side regions T2 including the left and right ends in the operation range, and the target vehicle angular velocity of zero is designated when the position is in a center region n2 including the center (neutral position). Transition regions T4 in which the target vehicle angular velocity ω gradually increases from the center region n2 toward the left and right side regions T2 are provided between the center region n2 and the left and right side regions T2.

Here, the maximum target vehicle angular velocity ω2 in the left and right side regions T2 in the target vehicle angular velocity map for high speed (b) is higher than the maximum target vehicle angular velocity ω1 in the left and right side regions T1 in the target vehicle angular velocity map for low speed (a), and the center region n2 in the target vehicle angular velocity map for high speed (b) is narrower than the center region n1 in the target vehicle angular velocity map for low speed (a). The transition regions T4 in the target vehicle angular velocity map for high speed (b) are wider than the transition regions T3 in the target vehicle angular velocity map for low speed (a).

According to a preferable embodiment, the target vehicle angular velocity map for low speed (a) corresponds to a case in which the actual speed of the vehicle is equal to or lower than 0.5 km/h, which can be substantially assumed to be zero. The target vehicle angular velocity map for high speed (b) corresponds to a case in which the actual speed of the vehicle is 4.5 km/h or higher. The initial maximum target vehicle angular velocity ω1 in the left and right side regions T1 in the target vehicle angular velocity map for low speed (a) at the start of use (β=0) is 60 degrees per second (1.05 rad/s). The initial maximum target vehicle angular velocity ω2 in the left and right side regions T2 in the target vehicle angular velocity map for high speed (b) at the start of use (β=0) is 90 degrees per second (1.57 rad/s) to 120 degrees per second (2.09 rad/s).

In the case of the update control ending time (β= final number of travels βm) indicated by the broken lines in Figure 5, a larger value than that at the start of use (β=0) is designated as a final target vehicle angular velocity ω1m in the target vehicle angular velocity map for low speed (a), and a final target vehicle angular velocity ω2m in the target vehicle angular velocity map for high speed (b), when the operation position of the joystick 83 is in any of the left and right side regions T1. For example, the target vehicle angular velocity ω1m at the update control ending time (β= final number of travels βm) is designated as 90 degrees per second (1.57 rad/s), and the target vehicle angular velocity ω2m is designated as 150 degrees per second (2.62 rad/s). Furthermore, the center regions n1 and n2 in which the target vehicle angular velocity of zero is designated are reduced.

Note that the control unit 10 calculates the actual speed of the electric vehicle 1 on the basis of the actual rotation speeds of the left and right motor units 40 (40L and 40R) detected by the respective rotation speed sensors 43. Depending on the vehicle actual speed and the cumulative total value β, the target vehicle angular velocity map for low speed (a) or the target vehicle angular velocity map for high speed (b) is selectively applied. Alternatively, when the actual speed is in an intermediate speed region between the low speed region and the high speed region, the target vehicle angular velocity corresponding to the actual speed and the cumulative total value β are calculated from the target vehicle angular velocity map for low speed (a) and the target vehicle angular velocity map for high speed (b).

For example, if first and second, two-step, speed thresholds are configured, and the map is switched to the target vehicle angular velocity map for high speed (b) when the actual speed becomes equal to or higher than the second speed threshold (e.g., 2.5 km/h) from the low speed region during application of the target vehicle angular velocity map for low speed (a), and the map is switched to the target vehicle angular velocity map for low speed (a) when the actual speed becomes lower than the first speed threshold (e.g., 1.5 km/h) lower than the second speed threshold during application of the target vehicle angular velocity map for high speed (b), the map switching frequency can be reduced and stable control can be performed.

It may be configured such that when the target vehicle angular velocity corresponding to the actual speed is calculated from the target vehicle angular velocity map for low speed (a) and the target vehicle angular velocity map for high speed (b), a target vehicle angular velocity may be designated to which target vehicle angular velocity designation values in the target vehicle angular velocity map for low speed (a) and the target vehicle angular velocity map for high speed (b) are proportionally distributed depending on the rate of the current actual speed to the actual speed corresponding to the target vehicle angular velocity map for high speed (b).

The following turning characteristics are obtained by control of applying the target vehicle angular velocity map for low speed (a) and the target vehicle angular velocity map for high speed (b) as described above according to the actual speed, and of gradually updating the target vehicle angular velocity map $\omega(x0)$ at the start of use ($\beta$=0) to the target vehicle angular velocity map $\omega(xm)$ at the update control ending time ($\beta$= final number of travels $\beta m$), according to the cumulative number of travels $\beta$.

That is, in a case in which the user immediately after start of use has low proficiency and in which the electric vehicle 1 is substantially in the stop state (the actual speed is in the low speed region or a speed of zero), a relatively large center region n1 (insensitive zone) is set on both the left and right sides of the neutral position of the joystick 83. Even if the user operates the joystick 83 to the left or right in this range, the electric vehicle 1 does not start to move. Accordingly, immediate transition from the stop state to the turning motion is prevented, and only when the user clearly intentionally operates the joystick 83 to any of the left and right side regions T1 is forward turning started.

In a case in which the actual speed of the electric vehicle 1 is in a high speed region, for example, when the user operates the joystick 83 forward and the vehicle is in a forward travelling state, the transition regions T4 are set adjacent to the left and right sides of the neutral position. By the user operating the joystick 83 from the forward tilted position to the left or right, traveling in a desired direction can be achieved while finely adjusting the course, and even in the case of operating the joystick 83 laterally to the left or right as described above, the target forward speed vc (Figure 4) is designated, thereby allowing even a user with low proficiency to achieve the steerable performance fairly corresponding to the straight travel speed of the electric vehicle 1.

On the other hand, according to increase in the cumulative number of travels $\beta$, the center regions n1 and n2 in which the target vehicle angular velocity of zero is designated are reduced. Accordingly, the course can be finely adjusted by a slight operation of the joystick 83, and furthermore, immediate transition from the stop state or forward or backward travel to the pivot turn (spin turn) can be achieved. Thus, the operation sensitivity (sensitivity) of turning and pivot turn by an operation on the joystick 83 to the left or right is improved, and transition to turning characteristics distinctive to a wheelchair can be achieved. Furthermore, there is an advantage that such change in turning characteristics is gradually performed according to the cumulative number of travels $\beta$, without providing uncomfortable feeling for the user.

Update control of target vehicle acceleration/deceleration and target vehicle angular acceleration/angular deceleration

Next, update control of the target vehicle acceleration a, the target vehicle deceleration d, the target vehicle angular acceleration $\alpha$ and the target vehicle angular deceleration $\delta$ based on the cumulative number of travels $\beta$ is described.

In the block diagram of Figure 3, the target vehicle speed v calculated by the target vehicle speed calculation block 110 according to the cumulative number of travels $\beta$, the vehicle actual speed, and the cumulative number of travels $\beta$ are input into both the target vehicle acceleration calculation block 111 and the target vehicle deceleration calculation block 112. Here, when the deviation between the vehicle actual speed and the target vehicle speed v is positive, the target vehicle acceleration calculation block 111 calculates the target vehicle acceleration a depending on the cumulative number of travels $\beta$. When the deviation between the vehicle actual speed and the target vehicle speed v is negative, the target vehicle deceleration calculation block 112 calculates the target vehicle deceleration d depending on the cumulative number of travels $\beta$.

These target vehicle acceleration a and the target vehicle deceleration d are the rates of change of speed in control that causes the vehicle actual speed to follow the target vehicle speed v given by the front, rear, left and right input on the joystick 83 and by the cumulative number of travels $\beta$, and corresponds to the sensitivity of speed control.

The target vehicle angular velocity $\omega$ calculated by the target vehicle angular velocity calculation block 120 depending on the cumulative total value $\beta$, and the cumulative total value $\beta$ are input into both the target vehicle angular acceleration calculation block 121 and the target vehicle angular deceleration calculation block 122. Here, when the deviation between the difference between the target rotation speeds of the left and right motors 41 (40L and 40R) corresponding to the target vehicle angular velocity $\omega$, and the difference between the actual rotation speeds of the left and right motors 41 (40L and 40R) detected by the rotation speed sensors 43 is positive, the target vehicle angular acceleration calculation block 121 calculates the target vehicle angular acceleration $\alpha$ depending on the cumulative total value $\beta$. When the deviation between the difference between the target rotation speeds of the left and right motors 41 (40L and 40R) corresponding to the target vehicle angular velocity $\omega$, and the difference between the actual rotation speeds of the left and right motors 41 (40L and 40R) detected by the rotation speed sensors 43 is negative, the target vehicle angular deceleration calculation block 122 calculates the target vehicle angular deceleration δ depending on the cumulative total value β.

These target vehicle angular acceleration α and target vehicle angular deceleration δ are the rates of change of angular velocity in control that causes the difference between the actual rotation speeds to follow the difference between the target rotation speeds of the left and right motors 41 (40L and 40R) corresponding to the target vehicle angular velocity ω given by the left and right input on the joystick 83 and the cumulative number of travels β, and corresponds to the sensitivity of turning control.

Consequently, in addition to the target vehicle speed v calculated by the target vehicle speed calculation block 110, and the target vehicle angular velocity ω calculated by the target vehicle angular velocity calculation block 120, the target vehicle acceleration a or the target vehicle deceleration d depending on the cumulative total value β, and the target vehicle angular acceleration α or the target vehicle angular deceleration δ depending on the cumulative total value β are input into the left and right motor target rotation speed calculation block 130. The target rotation speeds of the left and right motors 41 (40L and 40R) are calculated based on the target rotation speeds of the left and right motors 41 (40L and 40R) corresponding to the target vehicle speed v, on the difference between the target rotation speeds of the left and right motors 41 (40L and 40R) corresponding to the target vehicle angular velocity ω, on the target vehicle acceleration a or the target vehicle deceleration d, and on the target vehicle angular acceleration α or the target vehicle angular deceleration δ.

As described above, not only the target vehicle speed v and the target vehicle angular velocity ω depending on the cumulative number of travels β, but also the target vehicle acceleration a or the target vehicle deceleration d and the target vehicle angular acceleration α or the target vehicle angular deceleration δ provided depending on the cumulative number of travels β are reflected, and the target rotation speeds of the left and right motors 41 (40L and 40R) are calculated. The left and right motor required torque calculation block 150 calculates the left and right motor required torques on the basis of the deviation between the actual rotation speeds and the target rotation speeds of the left and right motors 41 (40L and 40R), thus executing current control for the left and right motors 41 (40L and 40R).

Accordingly, in the update control of the target vehicle speed v and the target vehicle angular velocity ω depending on the cumulative number of travels β, the sensitivities of speed control and turning control, that is, the response speeds, are further adjusted.

Target vehicle acceleration map

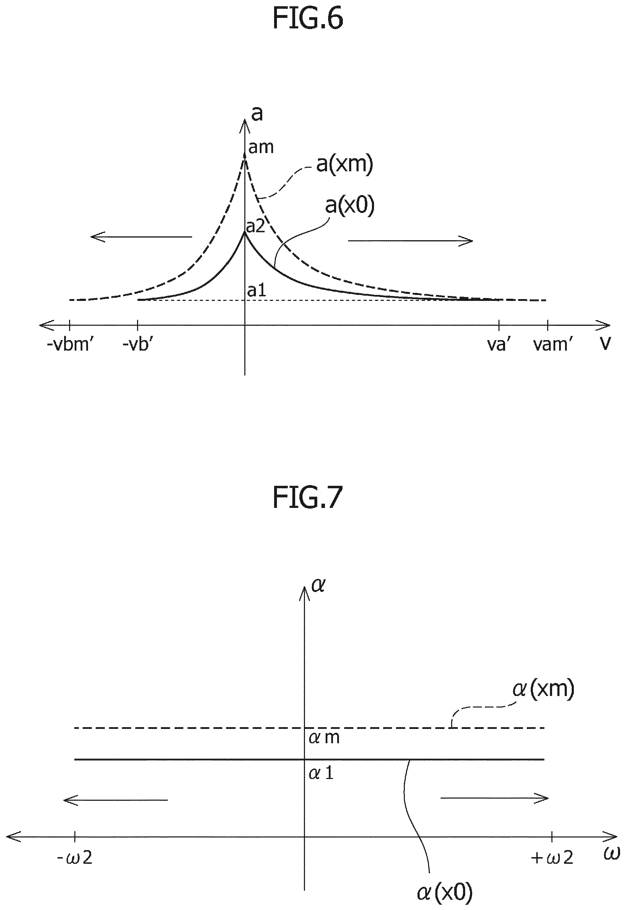

Figure 6 shows a target vehicle acceleration map that defines a relationship between the vehicle actual speed v and the target vehicle acceleration a for target vehicle acceleration calculation (111). Solid lines in the diagram indicate the initial target vehicle acceleration map a(x0) at the start of use (β=0). Broken lines indicate the final target vehicle acceleration map a(xm) at the update control ending time (β = final number of travels βm).

These target vehicle acceleration maps are stored as look-up tables in the ROM area of the control unit 10. By the expression 1 described above, the target vehicle acceleration a according to the cumulative number of travels β is calculated. After the cumulative number of travels β reaches the final number of travels βm, the final target vehicle acceleration map a(xm) is applied.

According to the target vehicle acceleration map shown in Figure 6, basically, when the vehicle actual speed v is zero, the maximum target vehicle accelerations a2 and am are designated. In addition, with respect to the initial target vehicle acceleration a2 (e.g., 2 km/h/s = 0.56 m/s$^2$) at the start of use (β=0), the final target vehicle acceleration am (e.g., 4 km/h/s = 1.11 m/s$^2$) at the update control ending time (β= final number of travels βm) is designated as a larger value. In each of the cases, the more the vehicle actual speed v increases, the smaller the target vehicle acceleration becomes. In the high speed region in the forward traveling direction and the backward traveling direction, a lower limit value a1 (e.g., 1 km/h/s = 0.28 m/s$^2$) is achieved.

That is, in a case in which the speed is zero or in the low speed region, the speed is caused to rapidly reach the target vehicle speed v, and in a case of being in the state of traveling in the high speed region, abrupt change in speed is suppressed to thus secure the traveling stability; such basic characteristics are the same. However, in the initial target vehicle acceleration map a(x0) at the start of use (β=0), the target vehicle acceleration is suppressed to about 50 to 60% of the target vehicle acceleration in the case of the final target vehicle acceleration map a(xm).

According to such a configuration, for a user having low proficiency, the sensitivity of speed control is suppressed, thereby allowing stable operation. In addition, the sensitivity of speed control is increased according to the cumulative number of travels β, thereby allowing a skilled user to sufficiently control acceleration performance of the electric vehicle 1.

Target vehicle angular acceleration map

Figure 7 shows a target vehicle angular acceleration map that defines a relationship between the angular velocity ω and the target vehicle angular acceleration α for target vehicle angular acceleration calculation (121). Solid lines in the diagram indicate the initial target vehicle angular acceleration map α(x0) at the start of use (β=0). Broken lines indicate the final target vehicle angular acceleration map α(xm) at the update control ending time (β= final number of travels βm).

In the target vehicle angular acceleration map shown in Figure 7, the initial target vehicle angular acceleration $\alpha1$ (e.g., 120 degrees/s$^2$ = 2.09 rad/s$^2$) at the start of use ($\beta$=0) is restrained to a smaller value (80%) than the final target vehicle angular acceleration $\alpha$m (e.g., 150 degrees/s$^2$ = 2.62 rad/s$^2$) at the update control ending time ($\beta$= final number of travels $\beta$m).

According to such a configuration, for a user having low proficiency, the sensitivity of turning control is suppressed, which suppresses abrupt turning and allows a stable turning and traveling. In addition, the sensitivity of turning control is increased according to the cumulative number of travels $\beta$, thereby allowing a skilled user to sufficiently exert the turning performance of the electric vehicle 1.

Target vehicle deceleration map

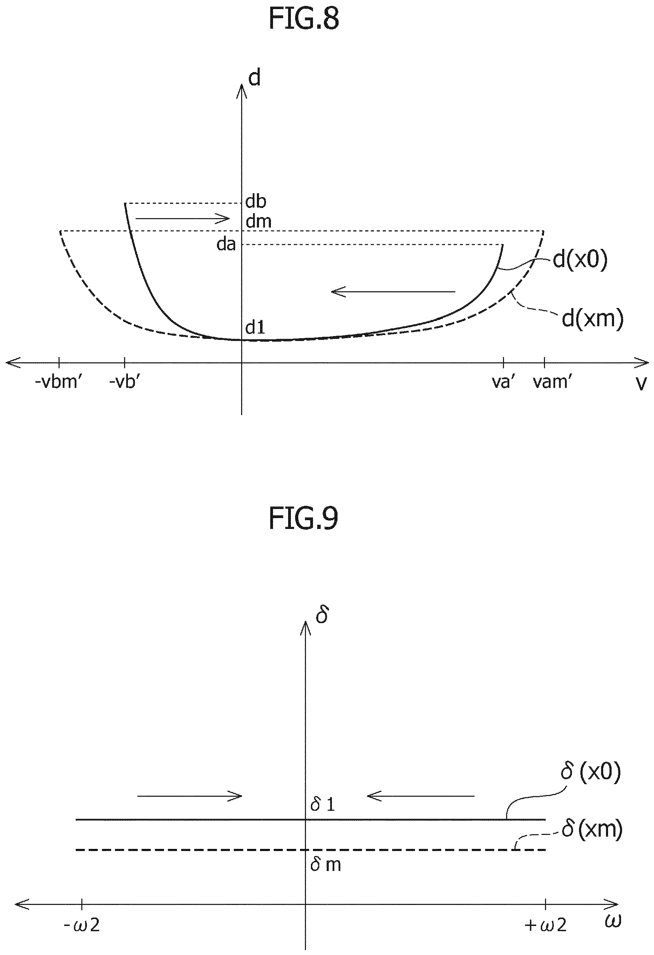

Figure 8 shows a target vehicle deceleration map that defines a relationship between the vehicle actual speed v and the target vehicle deceleration d for target vehicle deceleration calculation (112). Solid lines in the diagram indicate the initial target vehicle deceleration map d(x0) at the start of use ($\beta$=0). Broken lines indicate the final target vehicle deceleration map d(xm) at the update control ending time ($\beta$= final number of travels $\beta$m).

These target vehicle deceleration maps are stored as look-up tables in the ROM area of the control unit 10. By the expression 1 described above, the target vehicle deceleration d according to the cumulative number of travels $\beta$ is calculated. After the cumulative number of travels $\beta$ reaches the final number of travels $\beta$m, the final target vehicle deceleration map d(xm) is applied.

According to the target vehicle deceleration map shown in Figure 8, when the vehicle actual speed v in the forward traveling direction is in the high speed region (e.g., 4 km/h or higher), the maximum target vehicle decelerations da and dm during traveling forward are designated. The initial target vehicle deceleration da (e.g., 5 km/h/s = 1.39 m/s$^2$) at the start of use ($\beta$=0) has a smaller value than the final target vehicle deceleration dm (e.g., 6 km/h/s = 1.67 m/s$^2$) at the update control ending time ($\beta$= final number of travels $\beta$m).

According to such a configuration, for a user having low proficiency, the sensitivity of deceleration control is suppressed, thereby allowing a stable operation. In addition, the sensitivity of deceleration control is increased according to the cumulative number of travels $\beta$, thereby allowing a skilled user to sufficiently exert the deceleration performance of the electric vehicle 1.

On the other hand, when the vehicle actual speed v in the backward traveling direction is in the high speed region (e.g., -1 km/h), the maximum target vehicle deceleration db during traveling backward (e.g., 7 km/h/s = 1.94 m/s$^2$) is designated at the start of use ($\beta$=0). In the backward traveling direction, the absolute value of the traveling speed is suppressed to that of a low speed. Accordingly, even if the target vehicle deceleration is set to have a large value, the deceleration is not rapid, and secure stopping is prioritized.

Note that during traveling forward and during traveling backward, the target vehicle deceleration d decreases with decrease in the vehicle actual speed v. At the speed of zero and in the low speed region, the value becomes a lower limit value d1 (e.g., 1 km/h/s = 0.28 m/s$^2$).

Target vehicle angular deceleration map

Figure 9 shows a target vehicle angular deceleration map that defines a relationship between the angular velocity $\omega$ and the target vehicle angular deceleration $\delta$ for target vehicle angular deceleration calculation (122). Solid lines in the diagram indicate the initial target vehicle angular deceleration map $\delta$(x0) at the start of use ($\beta$=0). Broken lines indicate the final target vehicle angular deceleration map $\delta$(xm) at the update control ending time ($\beta$= final number of travels $\beta$m).

In the target vehicle angular deceleration map shown in Figure 9, the initial target vehicle angular deceleration $\delta1$ (e.g., 480 degrees/s$^2$ = 8.38 rad/s$^2$) at the start of use ($\beta$=0) is designated as a greater value than the final target vehicle angular deceleration $\delta$m (e.g., 360 degrees/s$^2$ = 6.28 rad/s$^2$) at the update control ending time ($\beta$= final number of travels $\beta$m).

Accordingly, secure turning stopping is prioritized for a user with low proficiency. On the other hand, by reducing the angular deceleration according to the cumulative number of travels $\beta$, for a skilled user, the ride quality is prioritized, and the reaction during turning stopping is reduced, which can achieve smooth stopping of turning. Such setting is related to a fact that in the target speed control described above, the target forward speed vc is designated even when the operation position of the joystick 83 is in the left and right side regions F2 at the start of use ($\beta$=0), and immediate transition to pivot turn is not achieved, and therefore, abrupt turning stopping is not performed even when a large value is designated as the target vehicle angular deceleration.

As described in detail above, the electric vehicle 1 according to the present invention yields operability and traveling characteristics according to proficiency of a user, by the configuration of gradually updating the control target values of defining the traveling characteristics and the turning characteristics of the electric vehicle 1, such as the target vehicle speed v, the target vehicle angular velocity $\omega$, the target vehicle acceleration a, the target vehicle angular acceleration $\alpha$, the target vehicle deceleration d, the target vehicle angular deceleration $\delta$ and the like, according to the cumulative number of travels $\beta$ (=Ps/Pu) obtained by dividing the cumulative total value Ps of the cumulative power consumption by the predetermined unit of control Pu.

Note that in the embodiment described above, the update control of the target vehicle speed v, the target vehicle angular velocity ω, the target vehicle acceleration a, the target vehicle angular acceleration α, the target vehicle deceleration d, and the target vehicle angular deceleration δ according to the cumulative number of travels β is described. Instead of execution of the entire update control, only the update control of any one control target value may be executed.

For example, only the update control of the target vehicle speed v and the target vehicle angular velocity ω, which target values are determined based on the operation position of the joystick 83, may be executed to gradually change the operation sensitivity of the joystick 83, the traveling characteristics and the turning characteristics. In contrast, only the update control of the target vehicle acceleration a, the target vehicle angular acceleration α, the target vehicle deceleration d, or the target vehicle angular deceleration δ may be executed to gradually change (increase/reduce) the acceleration/deceleration and the sensitivity of turning control, thereby facilitating support for the proficiency of the user.

In the embodiment described above, the case of applying the update control period (tutorial period, and final number of travels βm) that is common to all the control target values has been described. Alternatively, by applying final frequencies βm that are different according to the control target values, the ending timing of the update control may be made different according to the control target values.

It may be configured so that the achievement rate (β/βm) of the cumulative number of travels β to the final number of travels βm can be displayed as the progress degree (%) of the tutorial period on the display unit 80, and selective means for changing the setting (switch or the like) for increasing, decreasing or finishing the tutorial period through an operation by the user may be further provided.

Instead of being executed as in the tutorial period for the proficiency of the user, the update control as described above may be executed as in a running-in period of the electric vehicle 1 itself.

The embodiments of the present invention have been described above. However, the present invention is not limited to the embodiments. Based on the technical concept of the present invention, various modifications and changes can be made.

For example, in the embodiments described above, the case in which the electric vehicle 1 has the rollator mode has been described. However, the present invention can be implemented as a small electric vehicle and an electric wheelchair that have no rollator mode.

In the embodiments described above, the case of including the omni wheels as driven wheels 5 has been described. Alternatively, caster type free wheels may be included.

[Reference Signs List]

| | |
|---|---|
| 1 | Electric vehicle |
| 2 | Vehicle body |
| 3 | Rear handle (rollator mode operation unit) |
| 4 | Driving wheel (rear wheels) |
| 5 | Driven wheels (free wheels, front wheels) |
| 6 | Seat backrest |
| 7 | Seat |
| 8 | Riding mode operation unit |
| 9 | Battery |
| 10 | Control unit |
| 19 | Update management unit |
| 20 | Inclination sensor |
| 21 | Mobile base |
| 22 | Upper frames |
| 24 | Rear-side base |
| 25 | Front-side base |
| 26 | Release tag |
| 28 | Vehicle state detection sensor |
| 30 | Grip sensor |
| 34 | Electromagnetic brake release switch |
| 40 (40L, 40R) | Motor units |
| 41 | Left and right motors |
| 42 | Left and right electromagnetic brakes |
| 43 | Left and right rotation speed sensors |
| 80 | Display unit |
| 82 | Armrest |
| 83 | Joystick |
| 84 | Travel permission switch |
| 90 | BMS (battery management unit) |

**Claims**

1. A small electric vehicle comprising:

   a vehicle body that has a forward and backward direction, and a width direction;
   left and right driving wheels provided apart in the width direction of the vehicle body;
   free wheels provided apart from the left and right driving wheels in the forward and backward direction of the vehicle body;
   left and right motors connected so as to respectively transmit power to the left and right driving wheels;
   a battery for supplying power to the left and right motors;
   a battery management unit that manages charge and discharge of the battery;
   left and right rotation speed sensors for detecting rotation speeds of the left and right motors;
   an operation unit that includes a joystick-type operation element; and

a control unit that controls the left and right motors according to an amount of operation on the operation element,

wherein the control unit is configured to calculate target rotation speeds of the left and right motors, based on a target vehicle speed and on a target vehicle angular velocity that are provided by an operation position of the operation element, and control the left and right motors such that actual rotation speeds of the left and right motors follow the respective target rotation speeds, and

update at least one target value selected from the group consisting of the target vehicle speed, the target vehicle angular velocity, a target vehicle acceleration provided according to the target vehicle speed and an actual speed of a vehicle, and a target vehicle angular acceleration provided according to the target vehicle angular velocity and the actual speed of the vehicle, according to a cumulative number of travels obtained by dividing a cumulative total value of a cumulative power consumption obtained by the battery management unit by a predetermined unit of control.

2. The small electric vehicle according to claim 1, wherein updating of the at least one target value according to the cumulative number of travels includes increase in at least one of a target maximum vehicle speed provided by a forward maximum operation position of the operation element, or a target maximum vehicle angular velocity provided by a lateral maximum operation position of the operation element.

3. The small electric vehicle according to claim 1,

wherein the control unit includes: a target vehicle speed map that defines a relationship between the operation position of the operation element and the target vehicle speed; or a target vehicle angular velocity map that defines a relationship between the operation position of the operation element and the target vehicle angular velocity, the target vehicle speed map or the target vehicle angular velocity map is configured to designate zero as the target value in a center region including an operation origin of the operation element, and

updating of the at least one target value according to the cumulative number of travels is provided by updating the target vehicle speed map or the target vehicle angular velocity map, and includes reduction of the center region.

4. The small electric vehicle according to claim 1,

wherein the control unit includes a target vehicle speed map that defines a relationship between the operation position of the operation element and the target vehicle speed, and the target vehicle speed map

designates a target angular velocity of zero in a center region including an operation origin of the operation element, a first target forward speed in a forward region including a front end of the operation position, a target backward speed in a backward region including a rear end of the operation position, and a second target forward speed in left and right side regions including left and right side ends of the operation position, and the updating of the at least one target value according to the cumulative number of travels is provided by updating the target vehicle speed map, and the first target forward speed and the target backward speed increase, the second target forward speed decreases, and the second target forward speed becomes zero when the cumulative number of travels is a predetermined final value.

5. The small electric vehicle according to claim 1, wherein the control unit includes a target vehicle acceleration map that defines a relationship between an actual speed of the vehicle and the target vehicle acceleration, and the target vehicle acceleration map designates a maximum target acceleration when the actual speed of the vehicle is zero, and a minimum target acceleration is gradually reached as the actual speed of the vehicle increases, and the updating of the at least one target value according to the cumulative number of travels includes increase in the maximum target acceleration.

6. The small electric vehicle according to claim 5, wherein the control unit includes, besides the target vehicle acceleration map, a target vehicle deceleration map that defines a relationship between the actual speed of the vehicle and a target vehicle deceleration, and the target vehicle deceleration map designates a maximum target vehicle deceleration when the actual speed of the vehicle is a maximum, and a minimum target vehicle deceleration is gradually reached as the actual speed of the vehicle decreases, and the updating of the at least one target value according to the cumulative number of travels includes increase in a maximum target vehicle deceleration during traveling forward, and reduction in a maximum target vehicle deceleration during traveling backward.

7. The small electric vehicle according to claim 1, wherein the updating of the at least one target value according to the cumulative number of travels includes increase in the target vehicle angular acceleration, or increase in the target vehicle angular deceleration.

8. The small electric vehicle according to any one of claims 1 to 7, wherein the updating of the at least one target value according to the cumulative number of travels is continued until the cumulative number of travels reaches a preset final number of travels, and is maintained to be a final target value at the final number of travels after the final number of travels is reached.

9. The small electric vehicle according to claim 8, wherein the updating of the at least one target value according to the cumulative number of travels is calculated by proportionally distributing an initial value of the target value and a final value of the target value that are defined based on a map that defines the initial value and a map that defines the final value, at a ratio of the cumulative number of travels to the final number of travels.

10. The small electric vehicle according to any one of claims 1 to 9, further comprising means for setting or changing the unit of control.

# FIG.1

# FIG.2

# FIG.3

# FIG.4

# FIG.5

(a)

(b)

LEFT AND RIGHT
AMOUNT OF OPERATION

LEFT AND RIGHT
AMOUNT OF OPERATION

# FIG.6

# FIG.7

# FIG.8

# FIG.9

Europäisches Patentamt
European Patent Office
Office européen des brevets

# EUROPEAN SEARCH REPORT

**Application Number**

**EP 22 15 4608**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2016 048996 A (ADVANCED TELECOMMUNICATION RES INST INT) 7 April 2016 (2016-04-07) * paragraph [0001] – paragraph [0009]; claim 1 * * paragraph [0017] – paragraph [0030]; figures 1, 2 * | 1-10 | INV. B60L15/20 B60L3/12 |
| A | JP 2008 087674 A (TOYOTA MOTOR CORP) 17 April 2008 (2008-04-17) * paragraph [0001] – paragraph [0023] * * paragraph [0034] – paragraph [0064]; figures 1, 2 * | 1-10 | |
| A | JP 2014 064620 A (QUEST ENGINEERING KK) 17 April 2014 (2014-04-17) * paragraph [0001] – paragraph [0008] * * paragraph [0029] – paragraph [0053]; figures 4-9 * | 1 | |

**TECHNICAL FIELDS SEARCHED (IPC)**

B60L

The present search report has been drawn up for all claims

| Place of search | Date of completion of the search | Examiner |
|---|---|---|
| The Hague | 15 July 2022 | Utz, Tilman |

EPO FORM 1503 03.82 (P04C01)

## ANNEX TO THE EUROPEAN SEARCH REPORT
## ON EUROPEAN PATENT APPLICATION NO.

EP 22 15 4608

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2022

| Patent document cited in search report | | Publication date | Patent family member(s) | | Publication date |
|---|---|---|---|---|---|
| JP 2016048996 | A | 07-04-2016 | NONE | | |
| JP 2008087674 | A | 17-04-2008 | JP | 2008087674 A | 17-04-2008 |
| | | | WO | 2008041731 A1 | 10-04-2008 |
| JP 2014064620 | A | 17-04-2014 | NONE | | |

EPO FORM P0459

For more details about this annex : see Official Journal of the European Patent Office, No. 12/82

**EP 4 091 860 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014064620 A